(19) **Europäisches Patentamt / European Patent Office / Office européen des brevets**

(11) **EP 2 830 924 B1**

(12) **EUROPÄISCHE PATENTSCHRIFT**

| | |
|---|---|
| (45) Veröffentlichungstag und Bekanntmachung des Hinweises auf die Patenterteilung: **27.11.2019 Patentblatt 2019/48** | (51) Int Cl.: *B61D 7/00* (2006.01) *B61D 17/02* (2006.01) *B61D 39/00* (2006.01) |
| (21) Anmeldenummer: **13714590.0** | (86) Internationale Anmeldenummer: **PCT/EP2013/056353** |
| (22) Anmeldetag: **26.03.2013** | (87) Internationale Veröffentlichungsnummer: **WO 2013/144116 (03.10.2013 Gazette 2013/40)** |

(54) **TRANSPORTBEHÄLTER, FAHRZEUG, TRAKTIONSVERBAND, VERFAHREN ZUM BELADEN EINES TRANSPORTBEHÄLTERS SOWIE VERFAHREN ZUM TRANSPORTIEREN VON SCHÜTTGUT**

TRANSPORT CONTAINER, VEHICLE, TRACTION GROUP, METHOD FOR LOADING A TRANSPORT CONTAINER, AND METHOD FOR TRANSPORTING BULK MATERIAL

CONTENEUR DE TRANSPORT, VÉHICULE, ASSEMBLAGE DE TRACTION, PROCÉDÉ POUR CHARGER UN CONTENEUR DE TRANSPORT ET PROCÉDÉ POUR TRANSPORTER DE LA MARCHANDISE EN VRAC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2012 DE 102012205139**

(43) Veröffentlichungstag der Anmeldung:
**04.02.2015 Patentblatt 2015/06**

(73) Patentinhaber:
- **Technische Universität Berlin**
  **10623 Berlin (DE)**
- **Havelländische Eisenbahn AG**
  **13587 Berlin (DE)**

(72) Erfinder:
- **HECHT, Markus**
  **12247 Berlin (DE)**
- **MÄNGEL, Christian**
  **14552 Michendorf (DE)**
- **JAKATT, Harald**
  **12355 Berlin (DE)**
- **NAYERI, Christian**
  **12167 Berlin (DE)**
- **SHOEIB, Rami**
  **10407 Berlin (DE)**
- **ALSDORF, Günther**
  **14774 Brandenburg/Havel (DE)**
- **WULLSTEIN, Uwe**
  **15344 Strausberg (DE)**

(74) Vertreter: **Fleuchaus, Michael A. et al**
**Fleuchaus & Gallo Partnerschaft mbB**
**Patentanwälte**
**Steinerstraße 15/Haus A**
**81369 München (DE)**

(56) Entgegenhaltungen:
| | |
|---|---|
| WO-A1-2008/028307 | DE-U1-202009 011 413 |
| GB-A- 396 848 | US-A1- 2009 278 381 |

## Beschreibung

Die vorliegende Erfindung betrifft einen Transportbehälter, ein Fahrzeug, insbesondere ein Schienenfahrzeug, sowie einen Traktionsverband, der wenigstens eines der erfindungsgemäßen Fahrzeuge aufweist. Weiterhin betrifft die Erfindung ein Verfahren zum Beladen des Transportbehälters sowie ein Verfahren zum Transportieren von Schüttgut mittels des erfindungsgemäßen Fahrzeugs.

Ein solcher Transportbehälter ist z.B. von der WO-2008/028307-A1 bekannt.

Bei Personenzügen werden aufgrund der Erfordernisse der Energieeffizienz und Umweltverträglichkeit zunehmend aerodynamische Fahrzeuge eingesetzt. Dagegen wurde bisher im Schienengüterverkehr hinsichtlich der strömungsbedingten Energieverluste kaum etwas optimiert, da aufgrund der geringeren Geschwindigkeit auch geringere Energieverluste zu verzeichnen sind. Aufgrund der sich abzeichnenden Minderung von Rohstoffressourcen und damit einhergehenden Erhöhungen von Energiekosten sowie der Forderung nach besserer Umweltverträglichkeit spielen jedoch aerodynamische Gestaltungen auch im Güterverkehr eine immer größere Rolle.

Es hat sich herausgestellt, dass insbesondere an der Oberseite geöffnete Wagen, wie z.B. Schüttgutwagen, auch schon bei relativ geringen Geschwindigkeiten Luftströmungen bewirken, deren resultierende Kraftvektoren zumindest anteilig entgegen der jeweiligen, das Fahrzeug beschleunigenden Kräfte wirken. Dies beruht insbesondere auf Luftverwirbelungen an den in Fahrtrichtung begrenzenden Seitenwänden.

Schüttgutwagen sind oftmals derart ausgestaltet, dass sie mittels Schwerkraft seitlich nach unten geleert werden können. Alternativ verfügen sie über Kippvorrichtungen für die Ladewanne. Die Entladung erfolgt dann seitlich unter Verwendung der Kippvorrichtung.

Es können mehr Luftwirbel im Öffnungsbereich der Schüttgutwagen entstehen, wenn sie sich im leeren Zustand befinden und somit einen höheren aerodynamischen Widerstand als im beladenen Zustand haben, oder wenn sich die Oberfläche des geladenen Schüttgutes weiter unterhalb der Öffnung des Wagens befindet. Zwar sind die Strömungsgeschwindigkeiten und die damit verbundenen Energieverluste bei Güterzügen aufgrund der im Vergleich zu Personenzügen geringen Geschwindigkeiten relativ klein, jedoch wirken sie sich hinsichtlich des zu überwindenden Luftwiderstandes potenziert aus. Aus logistischen Gründen müssen relativ viele Fahrten von Güterzugwagen leer oder nur unvollständig gefüllt erfolgen. Demzufolge verursachen sie einen erheblichen luftwiderstandsbedingten Energieverbrauch, der einerseits die Betriebskosten erhöht und andererseits eine erhöhte Umweltbelastung bewirkt.

Herkömmliche Lösungen dieses Problems sind geschlossene Abdeckungen der Wagen oder Planen. Diese weisen jedoch die Nachteile auf, dass sich das Schüttgut nur relativ umständlich einfüllen lässt, da zuerst die Abdeckung bzw. die Plane abgenommen werden muss und nach dem Beladen wieder aufgebracht werden muss. Außerdem resultiert aus dem Verschlusssystem ein erhöhter Wartungsaufwand.

Die DE 295 10 635 U1 offenbart einen Schüttgutcontainer mit öffnungsfähigen Dachabdeckungen, wobei die Dachabdeckungen aus Dachplatten bestehen. Eine Alternative hierzu bietet eine Vorrichtung zum Abdichten der Ladeflächen von Schüttguttransportern mittels einer leicht auswechselbaren, mit Gummirippen besetzten federnden Dichtschiene, die in der DE 10 2006 044 609 A1 geschildert ist. Die US 4,909,154 offenbart eine Vorrichtung in Form einer Verkleidung bzw. einer Hülle, die an einem Trichterwagen anbringbar ist, um dessen Luftwiderstand zu verringern.

Es wurde außerdem herausgefunden, dass sich geringere Abstände zwischen einzelnen Wagen sowie kürzere Wagen hinsichtlich des Strömungswiderstandes günstig auswirken. Die DE 695 11 603 T2 schlägt außerdem vor, Lamellen zwischen einzelnen Wagen anzubringen, die den Luftwiderstand senken sollen.

Die DE 203 20 857 U1 beschreibt einen faltbaren offenen Container. Der Vorteil dieses Containers besteht darin, dass er im leeren und gefalteten Zustand aerodynamischer wirkt als im ungefalteten Zustand. Allerdings entsteht hier in erheblicher Weise ein Kosten- und Mehraufwand zur Nutzung des Containers.

Der vorliegenden Erfindung liegt die Aufgabe zugrunde, einen Transportbehälter, insbesondere einen Transportbehälter für ein Schienenfahrzeug, ein diesen Transportbehälter aufweisendes Fahrzeug sowie einen dieses Fahrzeug umfassenden Traktionsverband zur Verfügung zu stellen, wobei der Transportbehälter trotz permanenter Öffnung an seiner Oberseite und im Wesentlichen unabhängig vom Beladungszustand eine aerodynamisch vorteilhafte Ausgestaltung aufweist.

Diese Aufgabe wird durch den erfindungsgemäßen Transportbehälter nach Anspruch 1 und durch das Fahrzeug nach Anspruch 8 gelöst.

Vorteilhafte Ausgestaltungen des Transportbehälters sind in den Unteransprüchen 2 bis 7 angegeben. Eine vorteilhafte Ausgestaltung des Fahrzeuges ist in Anspruch 9 angegeben.

Außerdem wird ein Traktionsverband gemäß Anspruch 10 zur Verfügung gestellt, der wenigstens eines der erfindungsgemäßen Fahrzeuge aufweist.

Des Weiteren bezieht sich die Erfindung auf ein Verfahren zum Beladen eines erfindungsgemäßen Transportbehälters sowie auf ein Verfahren zum Transportieren von Schüttgut mittels eines erfindungsgemäßen Fahrzeugs gemäß der Ansprüche 11 und 12.

Der erfindungsgemäße Transportbehälter ist insbesondere zur Anwendung für ein Schienenfahrzeug ausgestaltet.

In bevorzugter Ausgestaltung ist der Transportbehälter Bestandteil eines Schüttgutwagens. Dabei soll jedoch auch die Anwendung der Erfindung an Flach- bzw. Tragwagen mit Stirnwänden nicht ausgeschlossen sein.

Weiterhin soll die Anwendung des Transportbehälters im Straßen-, Schiffs- oder Flugverkehr nicht ausgeschlossen sein.

Der Transportbehälter umfasst einen Transportraum zur Aufnahme von Transportgut, der an seiner Oberseite wenigstens eine Öffnung aufweist, wobei der Transportbehälter ein die Öffnung zumindest teilweise überbrückendes Gitter aufweist. Der Vorteil der Erfindung liegt insbesondere in der Erhöhung der aerodynamischen Effizienz beim Transport des Transportbehälters mit relativ hoher Geschwindigkeit, bei gleichzeitiger Gewährleistung der Beladung von oben durch Schüttung, ohne dabei das Gitter entfernen zu müssen. Selbstverständlich sollte das Gitter dabei derart ausgeführt sein, dass es eine ausreichende Festigkeit auch bei Belastung durch Schüttung des Transportgutes aufweist. Ein weiterer Vorteil des erfindungsgemäßen Transportbehälters besteht in der Vergrößerung seines Querschnittes sowie des axialen und des polaren Widerstandsmomentes und demzufolge auch der zulässigen Zug-, Druck-, Biege- und Torsionsspannungen im Transportbehälter, so dass dieser größeren Kräften aussetzbar ist und/oder größere Lasten aufnehmen kann, wobei andere Teile, insbesondere tragende Teile des Transportbehälters in ihrer Geometrie derart geändert werden können, dass der Transportbehälter ein geringeres Gewicht und demzufolge eine höhere Zuladungskapazität aufweist. Außerdem bietet das erfindungsgemäß angeordnete Gitter feinkörnigem Schüttgut Schutz vor Verwehung durch Fahrtwind, so dass das erfindungsgemäß angeordnete Gitter auch Vorteile bei geringeren Transportgeschwindigkeiten, wie etwa beim Schiffstransport, aufweist.

Das heißt, dass der Transportbehälter sowohl im Schienenverkehr oder Straßenverkehr als von einem Wagen aufgenommene Einheit oder als ein Bestandteil eines Wagens, wie z.B. eines Schüttgutwagens, Verwendung finden kann.

Als von einem Wagen separierbare Einheit kann der Transportbehälter z.B. als ein Container ausgestaltet sein, der seine vorteilhafte Wirkung auch im Schiffsverkehr entfalten kann. Dabei soll nicht ausgeschlossen sein, dass ein Schiff mit einem gemäß des erfindungsgemäßen Transportbehälters ausgestalteten Laderaum versehen ist.

Vorzugsweise ist der erfindungsgemäße Transportbehälter derart ausgestaltet, dass er den Transportraum seitlich begrenzende Seitenwände aufweist, zwischen denen das Gitter angeordnet ist. Somit weist der Transportbehälter einen an seiner Oberseite geöffneten Behälter auf, wie es z.B. beim Schüttgutwagen vorgesehen ist. Das Gitter überbrückt die Seitenwände. Die Seitenwände verlaufen im Wesentlichen in Längserstreckungsrichtung und begrenzen daher den Transportraum bzw. den Behälter senkrecht zur Längserstreckungsrichtung .

Insbesondere bei Transportbehältern, die im Schienen- und/ oder Straßenverkehr angewendet werden, ist das Längenmaß in Längserstreckungsrichtung größer als das Längenmaß in Quererstreckungsrichtung.

In diesem Fall entspricht die vorgesehene Fahrtrichtung der Längserstreckungsrichtung des Transportbehälters.

Bei Transportbehältern, bei denen die Längenmaße in Längserstreckungsrichtung und in Quererstreckungsrichtung gleich groß sind entspricht die vorgesehene Fahrtrichtung der Längserstreckungsrichtung oder der Quererstreckungsrichtung des Transportbehälters.

In einer Ausführungsvariante ist vorgesehen, dass das Gitter lediglich Querstreben aufweist, die sich im Wesentlichen quer zur Längserstreckungsrichtung erstrecken. Somit umfasst das Gitter Querstreben, die sich zwischen zwei im Wesentlichen in Längserstreckungsrichtung des Transportbehälters verlaufenden Wänden erstrecken. Die Querstreben sind demzufolge in der Art eines Rostes ausgebildet. Vorzugsweise erstrecken sich die Querstreben genau senkrecht zur Längserstreckungsrichtung des Transportbehälters.

In einer anderen Ausführungsvariante ist vorgesehen, dass das Gitter Querstreben aufweist, die sich im Wesentlichen quer zur Längserstreckungsrichtung erstrecken und Längsstreben aufweist, die sich im Wesentlichen in Längserstreckungsrichtung erstrecken. Somit umfasst das Gitter sich kreuzende Gitterstreben, wobei sich die Querstreben vorzugsweise genau senkrecht zur Längserstreckungsrichtung des Transportbehälters erstrecken und die Längsstreben sich genau in Längserstreckungsrichtung des Transportbehälters erstrecken. Der Vorteil dieser Ausgestaltung liegt in dem durch die Längsstreben bewirkten höheren axialen Widerstandsmoment und größeren Querschnitt des Transportbehälters quer zur Längserstreckungsrichtung, so dass Zug- und insbesondere die- bei Anwendung des Transportbehälters als Bestandteil eines Schienenfahrzeuges - hauptsächlich belastenden Druckkräfte in Längserstreckungsrichtung besser aufgenommen werden können bzw. geringere Spannungen im Transportbehälter hervorgerufen werden. Demzufolge kann die gesamte Transportbehälter- und demzufolge auch Fahrzeugkonstruktion leichter ausgeführt werden als bei herkömmlichen gleichartigen Transportbehältern bzw. Fahrzeugen, so dass ein geringerer Energieeinsatz zur Bewegung des Transportbehälters bzw. Fahrzeuges notwendig ist und/oder Ladung mit mehr Gewicht vom Transportbehälter bzw. Fahrzeug aufgenommen werden kann.

Das heißt, dass das Gitter sich kreuzende Streben aufweist, die in regelmäßigen Abständen angeordnet sind, wobei die Gitterstreben einer ersten Orientierung im Wesentlichen parallel zueinander angeordnet sind und die Gitterstreben einer zweiten Orientierung im Wesentlichen parallel zueinander angeordnet sind. Vorzugsweise sind die Orientierungen der Gitterstreben dabei senkrecht oder parallel zu den Seitenwänden des Transportbehälters, wobei die vorliegende Erfindung nicht auf derartige Winkelverhältnisse eingeschränkt ist. Außerdem ist die vorliegende Erfindung nicht auf Anordnung von Gitterstreben mit lediglich zwei Orientierungen eingeschränkt sondern es können gegebenenfalls auch noch Gitterstreben weiterer Orientierungen vorhanden sein. Diese Orientierungen können von 90° (in Bezug auf eine der Seitenwände) oder einem ganzzahligen Vielfachen davon abweichen.

In einer weiteren alternativen Ausgestaltung ist vorgesehen, dass das Gitter eine mit einer Vielzahl von Löchern versehene Platte ist. Bei Ausführung aus Metall ist dieses Gitter demzufolge ein Lochblech, wobei die Streben durch die die Löcher umgebenden Materialbereiche gebildet sind.

Erfindungsgemäß ist vorgesehen, dass das Gitter mit wenigstens einer Seitenwand mechanisch fest verbunden ist. Unter dieser mechanisch festen Verbindung ist im Sinne der Erfindung auch eine schwenkbare Anordnung des Gitters an der Seitenwand gemeint. Vorzugsweise ist das Gitter mit wenigstens zwei in Längserstreckungsrichtung verlaufenden Wänden fest verbunden, insbesondere wenn das Gitter nur aus Querstreben besteht. In der Ausgestaltung, in der das Gitter Quersowie auch Längsstreben aufweist, kann auch vorgesehen sein, dass das Gitter mit zwei in Längserstreckungsrichtung verlaufenden Wänden fest verbunden ist und mit zwei senkrecht zur Längserstreckungsrichtung verlaufenden Wänden fest verbunden ist. Bei schwenkbarer Anordnung an einer Seitenwand sollte eine mechanisch lösbare Fixierung des Gitters an der gegenüberliegenden Seitenwand erfolgen.

Die Seitenwände sind vorzugsweise geschlossene Wände.

Der Abstand D der Querstreben zueinander sollte zur Höhe H der Streben in einem Verhältnis $0,8 \leq D/H \leq 1,2$ stehen. Vorzugsweise ist $D/H = 1$, das heißt, dass der Abstand der Querstreben zueinander im Wesentlichen der Höhe der Querstreben entspricht. Es hat sich herausgestellt, dass ein derartiges Verhältnis besonders geringe Luftwiderstände und demzufolge eine gute Aerodynamik bewirkt. Außerdem wird dadurch eine ausreichende Tragfähigkeit gewährleistet. Die Höhe H ist dabei das Maß der Erstreckung der Streben in senkrechter Richtung. Der Abstand D ist in Längserstreckungsrichtung gemessen und beträgt maximal 0,75 m. Generell sollten die Abstände D zwischen den Querstreben ein Vielfaches des Durchmessers des jeweiligen Transportgutes sein, für welches der Transportbehälter konzipiert ist. Die Dicke T der Streben sollte wenigsten D/5 entsprechen.

Der Transportraum des Transportbehälters kann außerdem durch wenigstens eine Zwischenwand in Kammern geteilt sein, wobei die Zwischenwand einen Abstand von wenigstens 5 m zu einer der in Längserstreckungsrichtung begrenzenden Seitenwände aufweisen sollte. Die Zwischenwand kann dabei selbst eine Querstrebe ausbilden. Diese Zwischenwand bewirkt eine höhere Tragfähigkeit des Transportbehältersund kann außerdem als Stütze für das Gitter wirken.

Der Transportbehälter kann weiterhin derart ausgestaltet sein, dass er eine Entleerungseinrichtung umfasst, mit der eine Entladung des Transportgutes durch eine andere Öffnung als die mit dem Gitter versehene Öffnung realisierbar ist. Dadurch ist in der Art eines Schüttgutwagens eine einfache Entleerung nach unten möglich, ohne dass die Gitterstreben behindern würden.

Die Erfindung betrifft auch die Verwendung eines erfindungsgemäßen Transportbehälters zur Aufnahme und Transport von Schüttgut.

Ein weiterer Aspekt der Erfindung ist ein Fahrzeug, welches wenigstens einen erfindungsgemäßen Transportbehälter umfasst. Dieses Fahrzeug ist insbesondere ein Schüttgutwagen.

Bei einem solchen Schüttgutwagen besteht keine Behinderung beim Entladen, da Schüttgutwagen nach unten entleert werden.

Dabei muss der Transportbehälter nicht unbedingt ein integraler Bestandteil des Fahrzeuges sein, sondern der Transportbehälter kann als Bestandteil des Fahrzeuges auch lösbar, wie z.B. ein Container, mit den restlichen Fahrzeugbestandteilen verbunden sein. Es wird erfindungsgemäß außerdem ein Traktionsverband zur Verfügung gestellt, der eine Zugmaschine sowie wenigstens eines der erfindungsgemäßen Fahrzeuge umfasst. Vorzugsweise sind in dem Traktionsverband mehrere der Fahrzeuge, insbesondere mehrere Schüttgutwagen, die mit dem erfindungsgemäßen Gitter ausgestattet sind, angeordnet. Ein solcher Traktionsverband weist an seiner Oberseite geringere Luftverwirbelungen auf, deren Kraftkomponenten entgegen der Traktionskraft wirken.

Es wird weiterhin ein Verfahren zum Beladen eines erfindungsgemäßen Transportbehälters und demzufolge auch eines erfindungsgemäßen Fahrzeuges mit Schüttgut zur Verfügung gestellt, bei dem das Schüttgut durch die Gitteröffnungen in den Transportraum geschüttet wird. Dadurch, dass das Gitter Öffnungen freilässt, durch die das Schüttgut in den Transportraum fallen kann, entsteht keine wesentliche Behinderung beim Beladen des Transportbehälters. Die Entladung erfolgt durch Ausschüttung durch das Gitter.

Die Erfindung ergänzend wird außerdem ein Verfahren zum Transportieren von Schüttgut zur Verfügung gestellt, bei dem wenigstens ein erfindungsgemäßes Fahrzeug bzw. ein erfindungsgemäßer Traktionsverband zum Transport des Schüttgutes verwendet wird. Durch die Verwendung des erfindungsgemäßen Fahrzeugs lässt sich das Schüttgut energieeffizienter und somit auch umweltschonender transportieren.

Die Erfindung wird im Folgenden anhand der in den beiliegenden Zeichnungen dargestellten Ausführungsbeispiele näher erläutert.

Es zeigt

Figur 1     einen Schüttgutwagen in Seitenansicht,

Figur 2      eine erste Gittervariante in perspektivischer Ansicht, und

Figur 3      eine zweite Gittervariante in perspektivischer Ansicht.

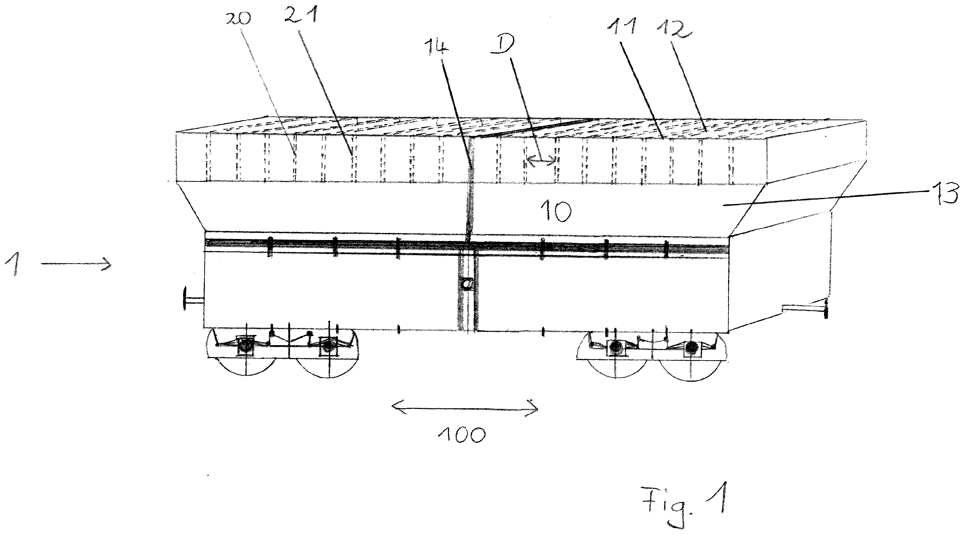

Zur Erläuterung der Erfindung wird auf einen in Figur 1 dargestellten Schüttgutwagen 1 Bezug genommen , der einen erfindungsgemäßen Transportbehälter umfasst. Dabei ist die vorliegende Erfindung nicht auf einen derartigen Schüttgutwagen eingeschränkt, sondern sie betrifft auch einen separaten Transportbehälter, der auf oder in einem Fahrzeug, wie z.B. in einem Schienenwagen, aufzunehmen ist.

Beim dem einen erfindungsgemäßen Transportbehälter umfassenden dargestellten Schüttgutwagen 1 entspricht die Längserstreckungsrichtung der vorgesehenen Fahrtrichtung 100.

In Figur 1 ist ein Schüttgutwagen 1 dargestellt, der einen Transportraum 10 zur Aufnahme von Schüttgut aufweist, der wiederum durch Seitenwände 13 abgegrenzt ist. An seiner Oberseite 11 weist der Schüttgutwagen eine Öffnung 12 auf. Durch diese Öffnung 12 kann der Transportraum 10 mit Schüttgut beladen werden. Die Entladung erfolgt durch eine im unteren Bereich des Schüttgutwagens 1 angeordnete Entladeeinrichtung. Alternativ weist der Schüttgutwagen 1 eine Kippvorrichtung auf, mit der der gesamte Transportraum 10 seitlich gekippt werden kann.

Erfindungsgemäß weist der Schüttgutwagen an seiner Oberseite 11 wenigstens ein Gitter 20 auf, welches in Figur 1 mit den gestrichelten Linien mit einer Vielzahl von Querstreben 21 angedeutet ist. Diese Querstreben 21 sind mit bestimmten Abständen D zueinander angeordnet.

Zur Unterteilung des Transportraumes 10 weist der Schüttgutwagen 1 außerdem noch eine Zwischenwand 14 auf, die das Gitter 20 statisch unterstützt und/oder eine Querstrebe 21 ausbildet.

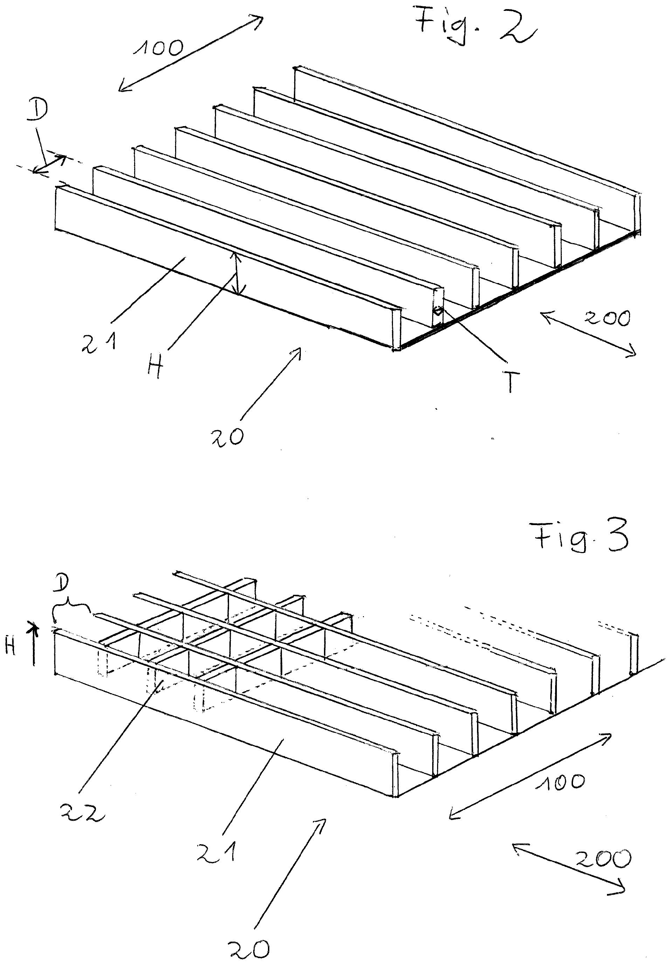

In den Figuren 2 und 3 sind zwei unterschiedliche erfindungsgemäße Gitteralternativen dargestellt. Das in Figur 2 gezeigte Gitter 20 weist lediglich Querstreben 21 auf, die mit bestimmten Abständen D zueinander angeordnet sind. Es ist ersichtlich, dass sich die Querstreben 21 in Quererstreckungsrichtung 200 und somit im Wesentlichen senkrecht zur Fahrtrichtung bzw. Längserstreckungsrichtung 100 erstrecken. Die Enden der Querstreben 21 sind mit Seitenwänden 13 des Schüttgutwagens 1 mechanisch zu verbinden.

In Figur 3 ist eine Gittervariante dargestellt, bei der das Gitter 20 Querstreben 21 sowie auch Längsstreben 22 aufweist. Ersichtlich ist, dass vorzugsweise die Querstreben 21 und Längsstreben 22 an ihrer Oberseite das gleiche Höhenniveau aufweisen, das heißt, dass sie bündig miteinander abschließen. Aus Gründen der Festigkeit sowie der Aerodynamik müssen jedoch die Längsstreben 22 nicht die gleiche Höhe H aufweisen wie die Querstreben 21, sondern die Längsstreben können mit geringerem Höhenmaß, insbesondere bei bündigem Abschluss mit den Querstreben, ausgestattet sein. Die Dicke T der Querstreben 21 und gegebenenfalls auch der Längsstreben 22 sollte mindestens dem Abstand D zwischen den Streben entsprechen.

Das erfindungsgemäße Gitter sollte sich vorzugsweise über die gesamte Öffnung 12 des Wagens erstrecken. In alternativer Ausführungsform kann das Gitter 20 auch nur teilweise die Öffnung 12 abdecken, wobei vorzugsweise das Gitter in Fahrtrichtung 100 im vorderen Bereich des Schüttgutwagens 1 angeordnet sein sollte.

Außerdem können die Abstände D zwischen den Streben nicht stets gleich sein, wobei insbesondere im in Fahrtrichtung 100 hinteren Bereich des Fahrzeugs die Streben größere Abstände haben können als im vorderen Fahrzeugbereich.

Durch die erfindungsgemäße Anordnung eines Gitters 20 werden Luftverwirbelungen an in Fahrtrichtung 100 begrenzenden Seitenwänden verhindert oder zumindest wesentlich verringert, so dass der Luftwiderstand des Fahrzeuges verringert wird und demzufolge weniger Energie eingesetzt werden muss, um das Fahrzeug zu bewegen. Weiterhin wird durch das Gitter 20 das Fahrzeug versteift, so dass es eine höhere Tragfähigkeit aufweist. Dadurch bedingt kann ein höheres Ladungsgewicht aufgenommen werden und/oder das Fahrzeug selbst mit weniger Materialeinsatz und demzufolge mit geringerem Gewicht ausgeführt werden, so dass geringere Kräfte zur Beschleunigung des Fahrzeuges notwendig sind.

### Bezugzeichenliste

| | |
|---|---|
| Schüttgutwagen | 1 |
| Transportraum | 10 |
| Oberseite | 11 |
| Öffnung | 12 |
| Seitenwand | 13 |
| Zwischenwand | 14 |
| Gitter | 20 |
| Querstrebe | 21 |
| Längsstrebe | 22 |
| Abstand | D |
| Höhe | H |
| Dicke | T |
| Fahrtrichtung, Längserstreckungsrichtung | 100 |
| Quererstreckungsrichtung | 200 |

### Patentansprüche

1. Transportbehälter umfassend einen durch Seitenwände (13) des Transportbehälters begrenzten Transportraum (10), der zur Aufnahme eines schüttgutartigen Transportgutes dient, der an seiner Oberseite (11) wenigstens eine für die Beladung des Transportgutes vorgesehene Öffnung (12) aufweist, wobei der Transportbehälter an seiner Oberseite (11) ein die Öffnung (12) zumindest teilweise überbrückendes Gitter (20) aufweist, welches zwischen den Seitenwänden (13) des Transportbehälters angeordnet ist,
**dadurch gekennzeichnet, dass**
das die Öffnung (12) zumindest teilweise überbrückende Gitter (20) mit wenigstens einer Seitenwand (13) mechanisch fest verbunden ist, welches ohne dass es entfernt werden muss, eine Beladung und/oder Entladung des Transportbehälters mit dem Schüttgut durch Gitteröffnungen des Gitters (20) zulässt, wobei das Gitter (20) eine ausreichende Festigkeit bei Belastung des Gitters (20) durch die Schüttung des Transportgutes aufweist.

2. Transportbehälter nach einem der vorhergehenden Ansprüche, **dadurch gekennzeichnet, dass** das Gitter (20) lediglich Querstreben (21) aufweist, die sich im Wesentlichen quer zur Längserstreckungsrichtung (100) erstrecken.

3. Transportbehälter nach einem der Ansprüche 1 und 2, **dadurch gekennzeichnet, dass** das Gitter (20) Querstreben (21) aufweist, die sich im Wesentlichen quer zur Längserstreckungsrichtung (100) erstrecken, und Längsstreben (22) aufweist, die sich im Wesentlichen in Längserstreckungsrichtung (100) erstrecken.

4. Transportbehälter nach Anspruch 1, **dadurch gekennzeichnet, dass** das Gitter (20) eine mit einer Vielzahl von Löchern versehene Platte ist.

5. Transportbehälter nach einem der Ansprüche 1 bis 4, **dadurch gekennzeichnet**, dassdas Gitter (20) auf wenigstens zwei Seitenwänden (13) formschlüssig mit zwei Seitenwänden (13) verbunden ist.

6. Transportbehälter nach einem derAnsprüche 2 bis 5, **dadurch gekennzeichnet, dass** der Abstand D der Querstreben (21) zueinander im folgenden Verhältnis zur Höhe H der Streben steht:

$$0{,}8 \le D/H \le 1{,}2.$$

7. Transportbehälter nach einem der Ansprüche 1 bis 6, **dadurch gekennzeichnet, dass** er eine Entleerungseinrichtung umfasst, mit der eine Entladung des Transportgutes durch eine andere Öffnung als die mit dem Gitter versehene Öffnung (12) realisierbar ist.

8. Fahrzeug, umfassend einen Transportbehälter nach einem derAnsprüche 1 bis 7.

9. Fahrzeug nach Anspruch 8, **dadurch gekennzeichnet, dass** es ein Schüttgutwagen ist.

10. Traktionsverband, umfassend eine Zugmaschine sowie wenigstens ein Fahrzeug nach einem der Ansprüche 8 und 9.

11. Verfahren zum Beladen eines Transportbehälters nach einem derAnsprüche 1 bis 7 mit Schüttgut, bei dem Schüttgut durch die Gitteröffnungen in den Transportraum (10) geschüttet wird.

12. Verfahren zum Transportieren von Schüttgut, bei dem wenigstens ein Fahrzeug nach einem der Ansprüche 8 und 9 oder ein Traktionsverband nach Anspruch 10 zum Transport des Schüttgutes verwendet wird.

**Claims**

1. A transport container comprising a transportation space (10), delimited by side walls (13) of the transport container, for receiving bulk-material-type goods to be transported, which transportation space includes, on its upper side (11), at least one opening (12) provided for loading with the goods to be transported, wherein the transport container on its upper side (11) includes a grate (20) that at least in part bridges the opening (12), which grate is arranged between the side walls (13) of the transport container,
**characterized in that**
the grate (20) that at least in part bridges the opening (20) is connected in a mechanically fixed manner to at least one side wall (13), which grate, without having to be removed, permits loading and/or unloading of the transport container with the bulk material through grate openings of the grate (20), the grate (20) having sufficient strength even when the grate (20) is loaded by pouring the goods to be transported.

2. The transport container as claimed in any preceding claim, **characterized in that** the grate (20) includes only transverse stays (21) which extend substantially transversely to the direction of longitudinal extent (100).

3. The transport container as claimed in either of claims 1 or 2, **characterized in that** the grate (20) includes transverse stays (21) which extend substantially transversely to the direction of longitudinal extent (100), and includes longitudinal stays (22) which extend substantially in the direction of longitudinal extent (100).

**4.** The transport container as claimed in claim 1, **characterized in that** the grate (20) is a plate which is provided with a multiplicity of holes.

**5.** The transport container as claimed in any of claims 1 to 4, **characterized in that** the grate (20) is connected, on at least two side walls (13), to two side walls (13) in a form-fitting manner.

**6.** The transport container as claimed in any of claims 2 to 5, **characterized in that** the spacing D of the transverse stays (21) between one another has the following ratio to the height H of the stays:

$$0.8 \le D/H \le 1.2.$$

**7.** The transport container as claimed in any of claims 1 to 6, **characterized in that** it comprises an emptying unit, by way of which unloading of the goods to be transported is implementable through an opening other than the opening (12) provided with the grate.

**8.** A vehicle comprising a transport container as claimed in any of claims 1 to 7.

**9.** The vehicle as claimed in claim 8, **characterized in that** it is a bulk material car.

**10.** A traction group comprising a tractor and at least one vehicle as claimed in either of claims 8 or 9.

**11.** A method for loading a transport container as claimed in any of claims 1 to 7 with bulk material, the method including pouring bulk material into the transportation space (10) via the grate openings.

**12.** A method for transporting bulk material, wherein at least one vehicle as claimed in either of claims 8 or 9, or a traction group as claimed in claim 10, is used for transporting the bulk material.

**Revendications**

**1.** Conteneur de transport comportant un espace de transport (10) délimité par des ridelles (13) du conteneur de transport, qui sert à la réception d'un produit transporté en vrac, qui présente sur sa face supérieure (11) au moins une ouverture (12) prévue pour le chargement du produit transporté, sachant que le conteneur de transport présente sur sa face supérieure (11) une grille (20) enjambant au moins partiellement l'ouverture (12), qui est disposée entre les ridelles (13) du conteneur de transport, **caractérisé en ce que**

la grille (20) enjambant au moins partiellement l'ouverture (12) est reliée mécaniquement de manière permanente avec au moins une ridelle (13) qui, sans qu'elle doive être ôtée, autorise un chargement et/ou un déchargement du conteneur de transport avec les matières en vrac à travers des ouvertures à grilles de la grille (20), sachant que la grille (20) présente une solidité suffisante en cas de sollicitation de la grille (20) par le versement du produit transporté.

**2.** Conteneur de transport selon une quelconque des revendications précédentes, **caractérisé en ce que** la grille (20) présente uniquement des traverses transversales (21), qui s'étendent pour l'essentiel transversalement à la direction d'extension longitudinale (100).

**3.** Conteneur de transport selon une quelconque des revendications 1 et 2, **caractérisé en ce que** la grille (20) présente des traverses transversales (21), qui s'étendent pour l'essentiel transversalement à la direction d'extension longitudinale (100), et présente des traverses longitudinales (22), qui s'étendent pour l'essentiel dans la direction d'extension longitudinale (100).

**4.** Conteneur de transport selon la revendication 1, **caractérisé en ce que** la grille (20) est une plaque dotée d'une pluralité de trous.

**5.** Conteneur de transport selon une quelconque des revendications 1 à 4, **caractérisé en ce que** la grille (20) est reliée sur au moins deux ridelles (13) de manière mécanique avec deux ridelles (13).

**6.** Conteneur de transport selon une quelconque des revendications 2 à 5, **caractérisé en ce que** la distance D des traverses transversales (21) les unes par rapport aux autres se trouve dans la relation suivante à la hauteur H des traverses :

$$0{,}8 \le D/H \le 1{,}2.$$

**7.** Conteneur de transport selon une quelconque des revendications 1 à 6, **caractérisé en ce qu'**il comporte un dispositif de décharge, avec lequel un déchargement du produit transporté est réalisable à travers une autre ouverture que l'ouverture (12) dotée de la grille.

**8.** Véhicule comportant un conteneur de transport selon une quelconque des revendications 1 à 7.

**9.** Véhicule selon la revendication 8, **caractérisé en ce que** c'est un wagon de transport de matières en vrac.

10. Assemblage de traction comportant un véhicule tracteur ainsi qu'au moins un véhicule selon une quelconque des revendications 8 et 9.

11. Procédé destiné au chargement d'un conteneur de transport selon une quelconque des revendications 1 à 7 avec des matières en vrac, pour lequel des matières en vrac sont déversées à travers les ouvertures à grilles dans l'espace de transport (10).

12. Procédé destiné au transport de matières en vrac, pour lequel au moins un véhicule selon une quelconque des revendications 8 et 9 ou un assemblage de traction selon la revendication 10 est utilisé pour le transport des matières en vrac.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008028307 A1
- DE 29510635 U1
- DE 102006044609 A1
- US 4909154 A
- DE 69511603 T2
- DE 20320857 U1